# EUROPEAN PATENT APPLICATION

(11) **EP 4 550 646 A1**
(43) Date of publication of application: **07.05.2025**
(21) Application number: 24210338.0
(22) Date of filing: 01.11.2024
(51) Int. Cl.: H02M 1/12, H02M 1/32, H02H 9/04

(54) **POWER CONVERSION APPARATUS**

(30) Priority: 02.11.2023 CN 202311455318
(71) Applicant: Huawei Digital Power Technologies Co., Ltd., Shenzhen, Guangdong 518043 (CN)
(72) Inventor: XU, Zhongda, Shenzhen, 518043 (CN); MA, Zheng, Shenzhen, 518043 (CN); ZHANG, Zhixiang, Shenzhen, 518043 (CN)
(74) Representative: Gill Jennings & Every LLP

(57) **Abstract**

This application provides a power conversion apparatus The power conversion apparatus includes a direct current input, a positive direct current bus, a negative direct current bus, a positive bus capacitor, a negative bus capacitor, an inverter circuit, a protection circuit, a first discharge circuit, a reference ground terminal, and a first alternating current output. The first alternating current output is configured to connect to a load. An input of the inverter circuit is connected to the direct current input separately through the positive direct current bus and the negative direct current bus. The positive direct current bus is connected to the negative direct current bus through the positive bus capacitor and the negative bus capacitor that are sequentially connected in series. A joint between the positive bus capacitor and the negative bus capacitor is connected to the first alternating current output, and is connected to the reference ground terminal through the protection circuit. An impedance value of the protection circuit increases as a change rate of a current flowing through the protection circuit increases, so that the first discharge circuit located between the direct current input and the reference ground terminal is connected According to this application, a common-mode lightning strike current does not damage a component of a power conversion circuit, while the power conversion apparatus is reliably grounded internally.

## Description

### TECHNICAL FIELD

This application relates to the field of power supply technologies, and in particular, to a power conversion apparatus.

### BACKGROUND

If an inverter runs in an off-grid mode, and a neutral output of the inverter is left unconnected, a voltage of the neutral output fluctuates, threatening safety of users or maintenance personnel. To resolve this problem, currently, the inverter mainly uses a manner of connecting the neutral output of the inverter to a reference ground terminal in the off-grid mode, so that the inverter is internally grounded, to avoid a voltage fluctuation of the neutral output of the inverter. However, when an input of the inverter encounters a common-mode lightning strike, because a path between the neutral output of the inverter and the ground terminal is a low-impedance path, all lightning energy flows internally through the inverter, and the energy is discharged on the low-impedance path of the neutral output of the inverter and the ground terminal. In this case, impact energy generated by the common-mode lightning strike damages a component of a power conversion circuit in the inverter. In conclusion, it can be learned that it is particularly important to prevent the impact energy generated by the common-mode lightning strike from damaging the component of the power conversion circuit, while the inverter is reliably grounded internally.

### SUMMARY

This application provides a power conversion apparatus. Impact energy generated by a common-mode lightning strike current does not damage a component of a power conversion circuit, while the power conversion apparatus is reliably grounded internally, thereby protecting the power conversion apparatus.

According to a first aspect, this application provides a power conversion apparatus. The power conversion apparatus includes a direct current input, a positive direct current bus, a negative direct current bus, a positive bus capacitor, a negative bus capacitor, an inverter circuit, a protection circuit, a first discharge circuit, a reference ground terminal, and a first alternating current output. The direct current input is configured to connect to a direct current source, and the first alternating current output is configured to connect to a load. An input of the inverter circuit is connected to the direct current input separately through the positive direct current bus and the negative direct current bus. The positive direct current bus is connected to the negative direct current bus through the positive bus capacitor and the negative bus capacitor that are sequentially connected in series. A joint, that is, a bus midpoint, between the positive bus capacitor and the negative bus capacitor is connected to the reference ground terminal through the protection circuit. The bus midpoint is further configured to provide a direct current voltage for the first alternating current output of the power conversion apparatus. An impedance value of the protection circuit increases as a change rate of a current flowing through the protection circuit increases, so that a common-mode voltage value of the direct current input is greater than a first breakover voltage threshold. The first discharge circuit is connected between the direct current input and the reference ground terminal of the power conversion apparatus, and is configured to be in a connected state when the common-mode voltage value of the direct current input is greater than the first breakover voltage threshold.

In this implementation, because the bus midpoint is connected to the reference ground terminal through the protection circuit, and the bus midpoint is further connected to a neutral output of the first alternating current output of the power conversion apparatus, the power conversion apparatus may be reliably grounded internally in an off-grid mode. In addition, when the direct current input of the power conversion apparatus encounters a common-mode lightning strike and the power conversion apparatus is in the off-grid mode, and when a common-mode lightning strike current flows through the protection circuit, the impedance value of the protection circuit increases, and the protection circuit is equivalent to a high impedance. In this way, the common-mode voltage value of the direct current input of the power conversion apparatus reaches the breakover voltage threshold of the first discharge circuit, and most of the common-mode lightning strike current flows to the first discharge circuit for discharge and does not flow through a power conversion circuit in the power conversion apparatus. In this way, impact energy generated by the common-mode lightning strike current does not damage a component of the power conversion circuit, while the power conversion apparatus is reliably grounded internally, thereby protecting the power conversion apparatus.

With reference to the first aspect, in a first possible implementation, the power conversion apparatus further includes a first switch and a controller, the bus midpoint is connected to the reference ground terminal through the first switch and the protection circuit that are connected in series, and the first alternating current output is further connected to a power grid. The controller is configured to: when a voltage of the power grid is less than a first breakover voltage threshold, that is, a power failure occurs in the power grid, control the first switch to be turned on.

In this implementation, according to the power conversion apparatus, the first switch is added between the bus midpoint and the reference ground terminal, and when the power failure occurs in the power grid, the first switch is controlled to be turned on, to ensure that the power conversion apparatus is reliably grounded internally only in the off-grid mode. In addition, the first alternating current output may not only be connected to the load, but also be connected to the power grid. It indicates that the first alternating current output may not only be used as a grid-connected output, but also be used as an off-grid output. Different from a power conversion apparatus in which a grid-connected output and an off-grid output are independent of each other, the power conversion apparatus in this implementation may use the grid-connected output and a related circuit thereof in both a grid-connected mode and an off-grid mode. This helps reduce circuit costs of the power conversion apparatus and reduce a size of the power conversion apparatus.

With reference to the first possible implementation of the first aspect, in a second possible implementation, the controller is further configured to: when the voltage of the power grid is greater than or equal to the first breakover voltage threshold, that is, no power failure occurs in the power grid, control the first switch to be turned off.

In this implementation, when no power failure occurs in the power grid, the power conversion apparatus controls the first switch to be turned off; or when the power failure occurs in the power grid, controls the first switch to be turned on, to ensure that the power conversion apparatus is reliably grounded internally only in the off-grid mode.

With reference to the first aspect, in a third possible implementation, the power conversion apparatus further includes a first switch, a second switch, a third switch, a second alternating current output, and a controller, the joint between the positive bus capacitor and the negative bus capacitor is connected to the reference ground terminal through the first switch and the protection circuit that are connected in series, the joint between the positive bus capacitor and the negative bus capacitor is further connected to the first alternating current output of the power conversion apparatus through the second switch, an output of the inverter circuit is further connected to the first alternating current output and the second alternating current output of the power conversion apparatus separately through the second switch and the third switch, and the second alternating current output is configured to connect to a power grid. The controller is configured to: when a voltage of the power grid is less than a first breakover voltage threshold, that is, a power failure occurs in the power grid, control the second switch to be turned on and the third switch to be turned off; and when the second switch is turned on and the third switch is turned off, that is, the power conversion apparatus is in the off-grid mode, control the first switch to be turned on.

In this implementation, according to the power conversion apparatus, the second switch is added between the output of the inverter circuit and the first alternating current output of the power conversion apparatus, and the third switch is added between the output of the inverter circuit and the second alternating current output of the power conversion apparatus, so that the power conversion apparatus can flexibly switch between the off-grid mode and a grid-connected mode. In addition, the power conversion apparatus in the off-grid mode controls the first switch to be turned on, to ensure that the power conversion apparatus is reliably grounded internally only in the off-grid mode.

With reference to the third possible implementation of the first aspect, in a fourth possible implementation, the controller is further configured to: when the voltage of the power grid is greater than or equal to the first breakover voltage threshold, control the second switch to be turned off and the third switch to be turned on; and when the second switch is turned off and the third switch is turned on, that is, the power conversion apparatus is in the grid-connected mode, control the first switch to be turned off.

In this implementation, the power conversion apparatus in the grid-connected mode controls the first switch to be turned off, and the power conversion apparatus in the off-grid mode controls the first switch to be turned on, to ensure that the power conversion apparatus is reliably grounded internally only in the off-grid mode.

With reference to any one of the first aspect to the fourth possible implementation of the first aspect, in a fifth possible implementation, the power conversion apparatus further includes a leakage current detection circuit, the leakage current detection circuit is located on a connection line between the output of the inverter circuit and the first alternating current output of the power conversion apparatus, and the leakage current detection circuit is further located on a connection line between the first alternating current output of the power conversion apparatus and the joint between the positive bus capacitor and the negative bus capacitor.

In this implementation, the leakage current detection circuit is located on a left side of a path between the bus midpoint and the reference ground terminal, to avoid a case in which the leakage current detection circuit fails in the off-grid mode because the leakage current detection circuit is located on a right side of the path between the bus midpoint and the reference ground terminal, thereby improving stability of the power conversion apparatus.

With reference to any one of the first aspect to the fifth possible implementation of the first aspect, in a sixth possible implementation, the protection circuit further includes an air-core inductor or an anti-saturation inductor.

In this implementation, there are various types of protection circuits, so that a structure of the power conversion apparatus is diverse and highly flexible.

With reference to any one of the first aspect to the sixth possible implementation of the first aspect, in a seventh possible implementation, the power conversion apparatus further includes a DC/DC conversion circuit, and the DC/DC conversion circuit is configured to: perform direct current conversion on a direct current of the direct current input of the power conversion apparatus, and output a converted direct current to the positive direct current bus and the negative direct current bus.

In this implementation, the power conversion apparatus may further include the DC/DC conversion circuit, so that a function and a circuit structure of the power conversion apparatus are more diversified and highly flexible.

With reference to any one of the first aspect to the seventh possible implementation of the first aspect, in an eighth possible implementation, the first discharge circuit includes a first protection element, a second protection element, and a third protection element, and the direct current input of the power conversion apparatus includes a first direct current input and a second direct current input. A first end of the first protection element is connected to the reference ground terminal, and a second end of the first protection element is connected to the first direct current input and the second direct current input of the power conversion apparatus respectively through the second protection element and the third protection element. Each of the first protection element, the second protection element, and the third protection element includes a gas discharge tube, a varistor, or a transient-voltage-suppression diode.

In this implementation, there are various types of protection elements, so that the structure of the power conversion apparatus is diverse and highly flexible.

With reference to any one of the first aspect to the eighth possible implementation of the first aspect, in a ninth possible implementation, the power conversion apparatus further includes a second discharge circuit, and the second discharge circuit is connected between the first alternating current output and the reference ground terminal of the power conversion apparatus. The impedance value of the protection circuit increases as the change rate of the current flowing through the protection circuit increases, so that the common-mode voltage value of the direct current input is greater than the first breakover voltage threshold, and a common-mode voltage value of the first alternating current output is greater than a second breakover voltage threshold. The second discharge circuit is in a connected state when the common-mode voltage value of the first alternating current output is greater than the second breakover voltage threshold.

In this implementation, in the off-grid mode, the power conversion apparatus is internally grounded. When the first alternating current output encounters common-mode surge, and when the common-mode surge current flows through the protection circuit, the impedance value of the protection circuit increases, and the protection circuit is equivalent to a high impedance. In this case, the common-mode voltage value of the first alternating current output of the power conversion apparatus reaches the breakover voltage threshold of the second discharge circuit, and most of the common-mode surge current flows to the second discharge circuit for discharge and does not flow through the power conversion circuit in the power conversion apparatus. In this way, impact energy generated by the common-mode surge current does not damage the component of the power conversion circuit, while the power conversion apparatus is reliably grounded internally, thereby protecting the power conversion apparatus.

With reference to the ninth possible implementation of the first aspect, in a tenth possible implementation, the second discharge circuit includes a fourth protection element, a fifth protection element, a sixth protection element, and a seventh protection element, and the first alternating current output of the power conversion apparatus includes a first alternating current sub-output, a second alternating current sub-output, and a third alternating current sub-output. A first end of the fourth protection element is connected to the reference ground terminal. A second end of the fourth protection element is connected to the first alternating current sub-output, the second alternating current sub-output, and the third alternating current sub-output of the power conversion apparatus respectively through the fifth protection element, the sixth protection element, and the seventh protection element. Each of the fourth protection element, the fifth protection element, the sixth protection element, and the seventh protection element includes a gas discharge tube, a varistor, or a transient-voltage-suppression diode.

In this implementation, there are various types of protection elements, so that the structure of the power conversion apparatus is diverse and highly flexible.

### BRIEF DESCRIPTION OF DRAWINGS

FIG. 1 is a diagram of an application scenario of a power conversion apparatus according to this application;
FIG. 2a is a diagram of a structure of a power conversion apparatus according to this application;
FIG. 2b is a diagram of another structure of a power conversion apparatus according to this application;
FIG. 3a is a diagram of another structure of a power conversion apparatus according to this application;
FIG. 3b is a diagram of another structure of a power conversion apparatus according to this application;
FIG. 3c is a diagram of another structure of a power conversion apparatus according to this application;
FIG. 3d is a diagram of another structure of a power conversion apparatus according to this application;
FIG. 4a is a diagram of another structure of a power conversion apparatus according to this application;
FIG. 4b is a diagram of another structure of a power conversion apparatus according to this application;
FIG. 4c is a diagram of another structure of a power conversion apparatus according to this application;
FIG. 4d is a diagram of another structure of a power conversion apparatus according to this application;
FIG. 4e is a diagram of another structure of a power conversion apparatus according to this application; and
FIG. 4f is a diagram of still another structure of a power conversion apparatus according to this application.

### DESCRIPTION OF EMBODIMENTS

A power conversion apparatus provided in this application may be used in a plurality of application fields such as a new energy smart microgrid field, a power transmission and distribution field, a new energy field (for example, a photovoltaic grid-connected field or a wind power grid-connected field), a photovoltaic power generation field, an energy storage and power generation field, and a wind power generation field. The power conversion apparatus provided in this application may be an inverter (including a string inverter and a distributed inverter), an energy storage inverter, an uninterruptible power supply (UPS), or the like. The power conversion apparatus may be used in different application scenarios such as a photovoltaic power supply scenario (including a large-sized photovoltaic power station scenario, a small- and medium-sized distributed photovoltaic power station scenario, a residential photovoltaic system scenario, or the like), an energy storage power supply scenario (including a large-sized energy storage power station scenario, a small- and medium-sized distributed energy storage power station scenario, a residential photovoltaic energy storage and power generation system scenario, or the like), and a power supply scenario by using an uninterruptible power supply (UPS). The following uses the photovoltaic power supply scenario as an example for description.

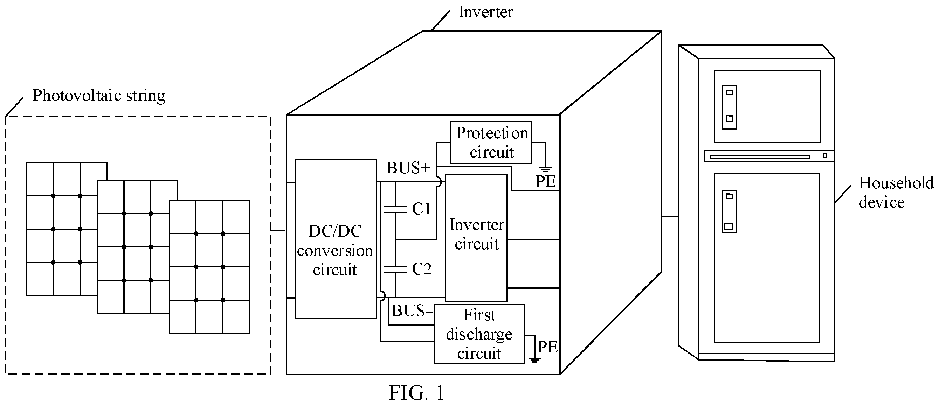

FIG. 1 is a diagram of an application scenario of a power conversion apparatus according to this application. In the photovoltaic power supply scenario, the power conversion apparatus provided in this application may be an inverter shown in FIG. 1. A direct current input of the inverter is connected to a photovoltaic string, and a first alternating current output is connected to an alternating current load such as a household device. The inverter includes the direct current input, a positive direct current bus BUS+, a negative direct current bus BUS-, a positive bus capacitor C1, a negative bus capacitor C2, a DC/DC conversion circuit, an inverter circuit, a protection circuit, a first discharge circuit, a reference ground terminal PE, and the first alternating current output. An input of the inverter circuit is connected to an output of the DC/DC conversion circuit separately through the positive direct current bus BUS+ and the negative direct current bus BUS-. An input of the DC/DC conversion circuit is connected to the direct current input of the inverter. An output of the inverter circuit is connected to the first alternating current output of the inverter. The positive direct current bus BUS+ is connected to the negative direct current bus BUS- sequentially through the positive bus capacitor C1 and the negative bus capacitor C2 that are connected in series. A joint between the positive bus capacitor C1 and the negative bus capacitor C2 is connected to the reference ground terminal PE through the protection circuit. The joint between the positive bus capacitor C1 and the negative bus capacitor C2 is further connected to the first alternating current output of the inverter. The first discharge circuit is connected between the input of the inverter and the reference ground terminal PE.

After the inverter starts running, the DC/DC conversion circuit performs direct current conversion on a direct current generated by the photovoltaic string connected to the input of the inverter, and then outputs a converted direct current to the inverter circuit. The inverter circuit changes, to an alternating current, the direct current that is obtained after direct current conversion and that is input from the input of the inverter circuit, to supply power to various types of electrical devices such as the alternating current load. In addition, in a process in which the inverter supplies power to the alternating current load, when a common-mode lightning strike occurs between the input of the inverter and the reference ground terminal, a change rate of a current of the protection circuit increases as a common-mode lightning strike current flows through the protection circuit, and an impedance value of the protection circuit increases as the change rate of the current flowing through the protection circuit increases, so that a common-mode voltage value of the direct current input of the inverter is greater than a first breakover voltage threshold. Because the first discharge circuit is in a connected state when the common-mode voltage value of the direct current input of the inverter is greater than the first breakover voltage threshold, most of the common-mode lightning strike current may be discharged through the first discharge circuit and does not flow through a power conversion circuit (including the inverter circuit) in the inverter. In this way, impact energy generated by the common-mode lightning strike current does not damage a component of the power conversion circuit, thereby protecting the inverter. The foregoing is merely an example of the application scenario of the power conversion apparatus provided in this application, but is not exhaustive. The application scenario is not limited in this application.

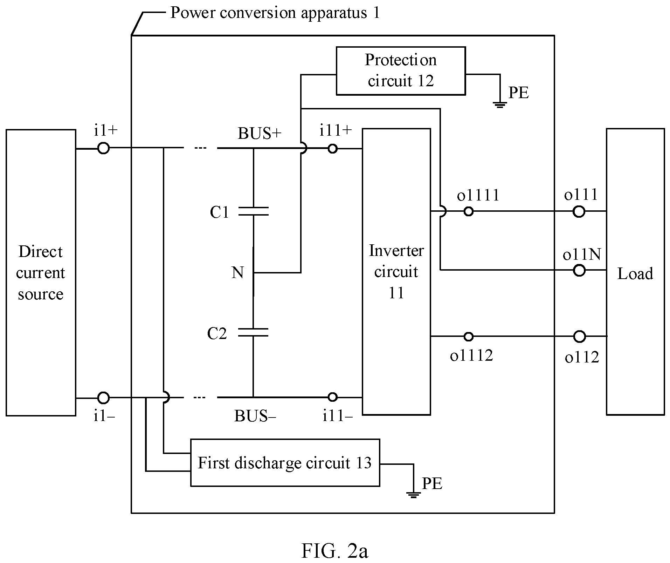

With reference to FIG. 2a to FIG. 4f, the following describes an example of a working principle of a power conversion apparatus provided in this application.

FIG. 2a is a diagram of a structure of a power conversion apparatus according to this application. As shown in FIG. 2a, the power conversion apparatus 1 includes a direct current input, a positive direct current bus BUS+, a negative direct current bus BUS-, a positive bus capacitor C1, a negative bus capacitor C2, an inverter circuit 11, a protection circuit 12, a first discharge circuit 13, and a first alternating current output. The direct current input of the power conversion apparatus 1 includes a first direct current input i1+ and a second direct current input i1-. The first alternating current output of the power conversion apparatus 1 includes a first alternating current sub-output o111, a second alternating current sub-output o112, and a third alternating current sub-output o11N. The first direct current input i1+ and the second direct current input i1- are configured to connect to a direct current source. A first input i11+ and a second input i11- of the inverter circuit 11 are connected to the first direct current input i1+ and the second direct current input i1- of the power conversion apparatus 1 respectively through the positive direct current bus BUS+ and the negative direct current bus BUS-. A first output o1111 and a second output o1112 of the inverter circuit 11 are respectively connected to the first alternating current sub-output o111 and the second alternating current sub-output o112 of the power conversion apparatus 1. The positive direct current bus BUS+ is connected to the negative direct current bus BUS- through the positive bus capacitor C1 and the negative bus capacitor C2 that are sequentially connected in series. A joint N (that is, a bus midpoint) between the positive bus capacitor C1 and the negative bus capacitor C2 is connected to a reference ground terminal PE through the protection circuit 12. The bus midpoint N is further configured to provide a direct current voltage for the first alternating current output of the power conversion apparatus 1. Correspondingly, a connection relationship between the bus midpoint N and the first alternating current output of the power conversion apparatus 1 is as follows: The bus midpoint N is further connected to the third alternating current sub-output o11N of the power conversion apparatus 1, that is, a neutral output of the power conversion apparatus. The first alternating current sub-output o111, the second alternating current sub-output ο112, and the third alternating current sub-output o11N of the power conversion apparatus 1 are configured to connect to a load. The first discharge circuit 13 is connected between the direct current input and the reference ground terminal PE of the power conversion apparatus 1. Specifically, two inputs of the first discharge circuit 13 are respectively connected to the first direct current input i1+ and the second direct current input i1- of the power conversion apparatus 1, and an output of the first discharge circuit 13 is connected to the reference ground terminal PE.

In an implementation, in a process in which the power conversion apparatus 1 supplies power to the load, when a common-mode lighting strike occurs between the first direct current input i1+ or the second direct current input i1- and the reference ground terminal PE of the power conversion apparatus 1, and the common-mode lightning strike current flows through the protection circuit 12, because a change rate of a current of the protection circuit 12 suddenly increases, an impedance value of the protection circuit 12 increases as the change rate of the current flowing through the protection circuit 12 increases. Thus, a common-mode voltage value between the direct current input and the reference ground terminal PE of the power conversion apparatus 1 is greater than a first breakover voltage threshold. In addition, because the first discharge circuit 13 is in a connected state when a common-mode voltage value of the power conversion apparatus 1 is greater than the first breakover voltage threshold, most of the common-mode lightning strike current flows to the first discharge circuit 13 for discharge and does not flow through a power conversion circuit in the power conversion apparatus 1.

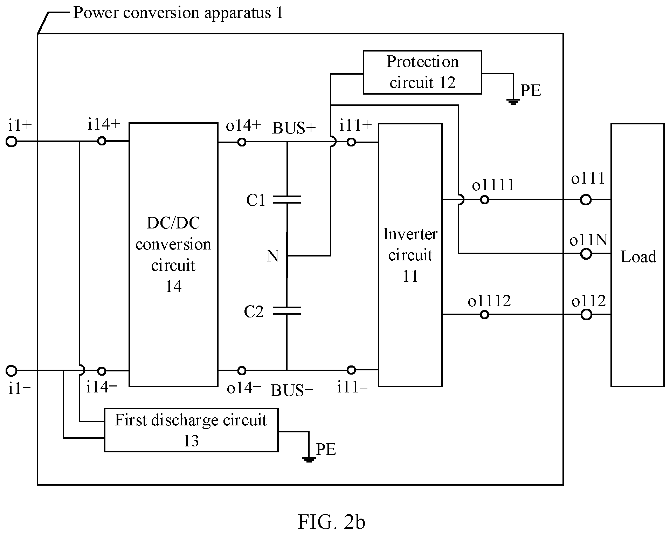

It should be noted that, in this application, that A is connected to B may be that A is directly connected to B or A is indirectly connected to B through C. This is not limited in this application. Specifically, the first input i11+ and the second input i11- of the inverter circuit 11 may be directly connected to the first direct current input i1+ and the second direct current input i1- of the power conversion apparatus 1 respectively through the positive direct current bus BUS+ and the negative direct current bus BUS-. In addition, a DC/DC conversion circuit may be further connected between the direct current input, and the positive direct current bus BUS+ and the negative direct current bus BUS- of the power conversion apparatus 1. The DC/DC conversion circuit is configured to perform direct current conversion on a direct current output by the direct current source connected to the direct current input of the power conversion apparatus 1. When the power conversion apparatus 1 is a photovoltaic inverter, the direct current source may be a photovoltaic string. In this case, the DC/DC conversion circuit performs direct current conversion on the direct current output by the direct current source, and further implements maximum power point tracking (MPPT) on the photovoltaic string, to ensure highly efficient power generation of the photovoltaic string. Herein, for a specific connection relationship of the DC/DC conversion circuit, refer to a power conversion apparatus 1 shown in FIG. 2b. As shown in FIG. 2b, the power conversion apparatus 1 further includes a DC/DC conversion circuit 14. The first input i11+ of the inverter circuit 11 is connected to a first output o14+ of the DC/DC conversion circuit 14 through the positive direct current bus BUS+. The second input i11- of the inverter circuit 11 is connected to a second output o14- of the DC/DC conversion circuit 14 through the negative direct current bus BUS-. A first input i14+ and a second input i14- of the DC/DC conversion circuit 14 are respectively connected to the first direct current input i1+ and the second direct current input i1- of the power conversion apparatus 1. A structure of the power conversion apparatus 1 is diverse and highly flexible.

In this embodiment of this application, because the bus midpoint is connected to the reference ground terminal through the protection circuit, and the bus midpoint is further connected to the neutral output of the power conversion apparatus 1, the power conversion apparatus 1 may be reliably grounded internally in an off-grid mode. In addition, when the direct current input of the power conversion apparatus 1 encounters the common-mode lightning strike, and when the common-mode lightning strike current flows through the protection circuit 12, the impedance value of the protection circuit 12 increases. In this case, a common-mode voltage value of the direct current input of the power conversion apparatus 1 reaches a breakover voltage threshold of the first discharge circuit 13, and most of the common-mode lightning strike current flows to the first discharge circuit 13 for discharge and does not flow through the power conversion circuit in the power conversion apparatus 1. In this way, impact energy generated by the common-mode lightning strike current does not damage a component of the power conversion circuit, while the power conversion apparatus 1 is reliably grounded internally, thereby protecting the power conversion apparatus 1.

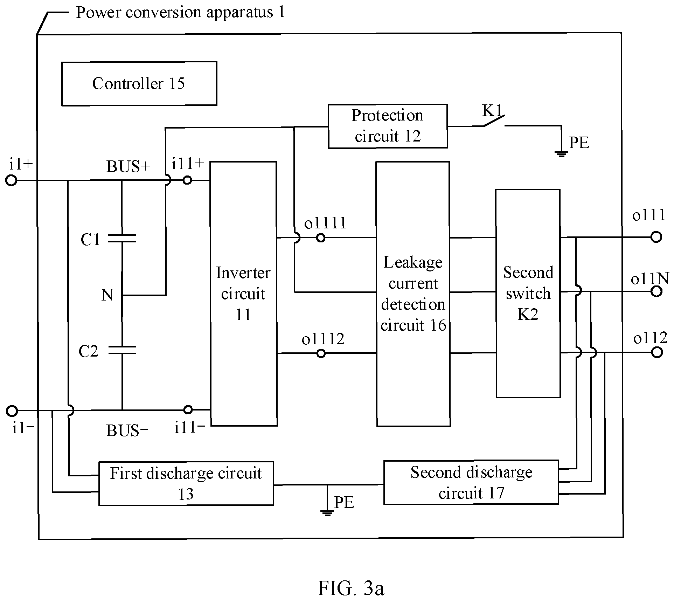

FIG. 3a is a diagram of another structure of a power conversion apparatus according to this application. As shown in FIG. 3a, compared with the power conversion apparatus 1 shown in FIG. 2a, the power conversion apparatus 1 shown in FIG. 3a further includes a first switch K1 and a controller 15. The bus midpoint N is connected to the reference ground terminal PE through the protection circuit 12 and the first switch K1 that are connected in series. The first alternating current sub-output o111, the second alternating current sub-output o112, and the third alternating current sub-output o11N of the power conversion apparatus 1 are further configured to connect to an alternating current power grid. Optionally, the power conversion apparatus 1 further includes a second switch K2. The first output o1111 and the second output o1112 of the inverter circuit 11 are connected to the first alternating current sub-output o111 and the second alternating current sub-output o112 of the power conversion apparatus 1 through the second switch K2. The bus midpoint N is further connected to the third alternating current sub-output o11N of the power conversion apparatus 1 through the second switch K2. Optionally, the power conversion apparatus 1 further includes a leakage current detection circuit 16. The first output ο1111 and the second output ο1112 of the inverter circuit 11 are connected to the first alternating current sub-output o111 and the second alternating current sub-output o112 of the power conversion apparatus 1 separately through the leakage current detection circuit 16 and the second switch K2 that are connected in series. The bus midpoint N is connected to the third alternating current sub-output o11N of the power conversion apparatus 1 through the leakage current detection circuit 16 and the second switch K2 that are connected in series. Optionally, the power conversion apparatus 1 further includes a second discharge circuit 17. The second discharge circuit 17 is connected between the first alternating current output and the reference ground terminal PE of the power conversion apparatus 1. Specifically, three inputs of the second discharge circuit 17 are respectively connected to the first alternating current sub-output o 111, the second alternating current sub-output o112, and the third alternating current sub-output o11N of the power conversion apparatus 1. An output of the second discharge circuit 17 is connected to the reference ground terminal PE.

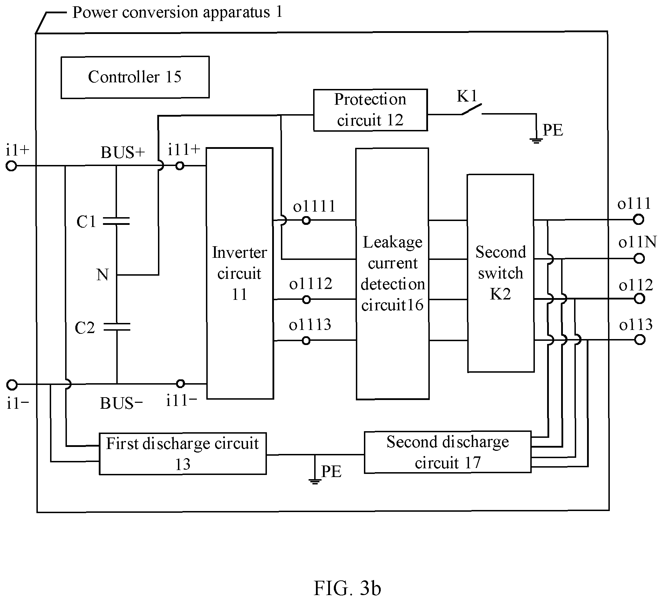

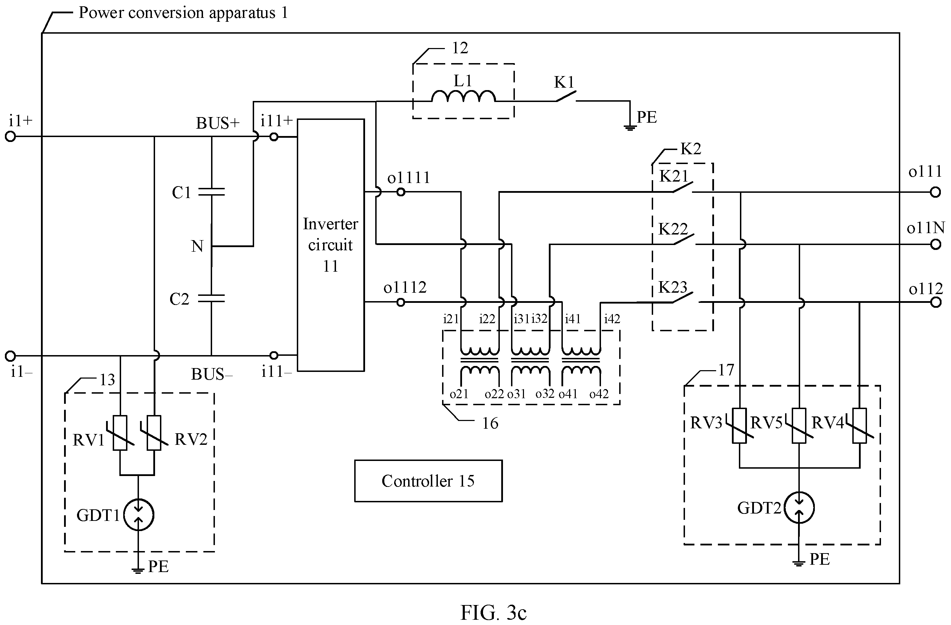

It should be noted that the power conversion apparatus 1 shown in FIG. 3a is a single-phase power conversion apparatus. The power conversion apparatus 1 provided in this application is also applicable to a three-phase power conversion apparatus. For details, refer to the power conversion apparatus 1 shown in FIG. 3b. As shown in FIG. 3b, compared with the power conversion apparatus 1 shown in FIG. 3a, the first alternating current output of the power conversion apparatus 1 shown in FIG. 3b further includes a fourth alternating current sub-output o113, an output of the inverter circuit 11 includes a third output o 1113, and the third output o1113 of the inverter circuit 11 is connected to the fourth alternating current sub-output o113 of the power conversion apparatus 1 through the leakage current detection circuit 16 and the second switch K2 that are connected in series. The first alternating current sub-output o 111, the second alternating current sub-output o112, and the fourth alternating current sub-output o113 of the power conversion apparatus 1 correspond to a three-phase alternating current output of the power conversion apparatus 1. Regardless of whether the power conversion apparatus 1 is the single-phase power conversion apparatus or the three-phase power conversion apparatus, the power conversion apparatus 1 has the same working principle. Therefore, for ease of description, the following specifically describes the single-phase power conversion apparatus shown in FIG. 3a with reference to the power conversion apparatus shown in FIG. 3c.

FIG. 3c is a diagram of another structure of a power conversion apparatus according to this application. As shown in FIG. 3c, the protection circuit 12 is an air-core inductor L1. The first discharge circuit 13 includes a first protection element, a second protection element, and a third protection element. A first end of the first protection element is connected to the reference ground terminal PE, and a second end of the first protection element is connected to the first direct current input i 1 + and the second direct current input i1- of the power conversion apparatus 1 respectively through the second protection element and the third protection element. Each protection element of the first discharge circuit 13 includes a gas discharge tube, a varistor, a transient-voltage-suppression diode, or a fuse. Types of the foregoing three protection elements may be the same or different. This is not limited in this application. For example, the first protection element is a gas discharge tube GDT1, and the second protection element and the third protection element are respectively varistors RV1 and RV2. The second discharge circuit 17 includes a fourth protection element, a fifth protection element, a sixth protection element, and a seventh protection element. A first end of the fourth protection element is connected to the reference ground terminal PE, and a second end of the fourth protection element is connected to the first alternating current sub-output o111, the second alternating current sub-output o112, and the third alternating current sub-output o11N of the power conversion apparatus 1 respectively through the fifth protection element, the sixth protection element, and the seventh protection element. Each protection element of the second discharge circuit 17 includes a gas discharge tube, a varistor, a transient-voltage-suppression diode, or a fuse. Types of the foregoing four protection elements may be the same or different. This is not limited in this application. For example, the fourth protection element is a gas discharge tube GDT2, and the fifth protection element, the sixth protection element, and the seventh protection element are respectively varistors RV3, RV4, and RV5.

The second switch K2 includes switches K21, K22, and K23. The leakage current detection circuit 16 includes a first-group input, a second-group input, and a third-group input. The first-group input includes a first-group first input i21 and a first-group second input i22. The second-group input includes a second-group first input i31 and a second-group second input i32. The third-group input includes a third-group first input i41 and a third-group second input i42. The first output o1111 of the inverter circuit 11 is connected to the first-group first input i21. The first-group second input i22 is connected to the first alternating current sub-output o111 of the power conversion apparatus 1 through the switch K21. The second output o1112 of the inverter circuit 11 is connected to the third-group first input i41. The third-group second input i42 is connected to the second alternating current sub-output o112 of the power conversion apparatus 1 through the switch K23. The bus midpoint N is connected to the second-group first input i31. The second-group second input i32 is connected to the third alternating current sub-output o11N of the power conversion apparatus 1 through the switch K22. The leakage current detection circuit 16 further includes a first-group output, a second-group output, and a third-group output. The first-group output includes a first-group first output o21 and a first-group second output o22. The second-group output includes a second-group first output o31 and a second-group second output o32. The third-group output includes a third-group first output o41 and a third-group second output o42. The controller 15 may obtain a leakage current value of the first alternating current output of the power conversion apparatus 1 by obtaining current values of the three groups of outputs of the leakage current detection circuit 16. Therefore, when the leakage current value of the first alternating current output is greater than a leakage current threshold, the power conversion apparatus 1 is protected, for example, the second switch K2 is controlled to be turned off.

In an optional implementation, after the power conversion apparatus 1 starts working, the controller 15 controls the switches K21 to K23 of the second switch K2 to be all turned on. When a voltage of the alternating current power grid is less than a first breakover voltage threshold, it indicates that a power failure occurs in the alternating current power grid, and the power conversion apparatus 1 is in the off-grid mode. In this case, the first alternating current output of the power conversion apparatus 1 is connected to the alternating current load, and the controller 15 controls the first switch K1 to be turned on, so that the power conversion apparatus 1 is reliably grounded internally in the off-grid mode.

After the power conversion apparatus 1 is reliably grounded internally, when a common-mode lightning strike current exists on the direct current input of the power conversion apparatus 1, the change rate of the common-mode lightning strike current is greater than a change rate, existing when the common-mode lightning strike current does not exist on the direct current input of the power conversion apparatus 1, of a working current of the power conversion apparatus 1. Therefore, when the common-mode lightning strike current flows through the air-core inductor L1, a change rate of a current of the air-core inductor L1 suddenly increases, and an impedance value of the air-core inductor L1 increases as the change rate of the current flowing through the air-core inductor L1 increases. In this case, the air-core inductor L1 is equivalent to a high impedance. Thus, the following may be obtained: When the common-mode lightning strike current flows through the air-core inductor L1, the air-core inductor L1 is equivalent to the high impedance, so that the common-mode voltage value of the direct current input of the power conversion apparatus 1 reaches the first breakover voltage threshold. The common-mode voltage value of the direct current input includes a voltage value between the first direct current input i1+ and the reference ground terminal PE of the power conversion apparatus 1, or a voltage value between the second direct current input i1- and the reference ground terminal PE of the power conversion apparatus 1. In addition, when the common-mode voltage value of the direct current input of the power conversion apparatus 1 reaches the first breakover voltage threshold, the gas discharge tube GDT1 is broken down, the first discharge circuit 13 is in the connected state, and an impedance value of the varistor RV1 or RV2 rapidly decreases. In other words, the first discharge circuit 13 is in the connected state. Therefore, most of the common-mode lightning strike current flows to the first discharge circuit 13 for discharge and does not flow through the power conversion circuit in the power conversion apparatus 1. In this way, impact energy generated by the common-mode lightning strike current does not damage a component of the power conversion circuit, while the power conversion apparatus is reliably grounded internally, thereby protecting the power conversion apparatus 1. The first breakover voltage threshold may be a sum of a breakover voltage threshold of the gas discharge tube GDT 1 and a breakover voltage threshold of the varistor RV1 or RV2.

After the power conversion apparatus 1 is reliably grounded internally, when the common-mode lightning strike current does not exist on the direct current input of the power conversion apparatus 1, the change rate of the working current of the power conversion apparatus 1 is small. In addition, when the change rate of the current flowing through the air-core inductor L1 decreases, the impedance value of the air-core inductor L1 decreases accordingly, and the air-core inductor L1 is equivalent to a low impedance. In this case, a voltage value between the bus midpoint N and the reference ground terminal PE is less than the second breakover voltage threshold. In other words, when the common-mode lightning strike current does not exist on the direct current input of the power conversion apparatus 1, the impedance value of the air-core inductor L1 may be ignored. Further, it may be ensured that when the common-mode lightning strike current does not exist on the direct current input of the power conversion apparatus 1 and the power conversion apparatus 1 is in the off-grid mode, a grounding path between the bus midpoint N and the reference ground terminal PE is a low-impedance path, thereby ensuring that the bus midpoint N and the reference ground terminal PE are at the same potential.

In addition, after the power conversion apparatus 1 is reliably grounded internally, when the first alternating current output of the power conversion apparatus 1 encounters common-mode surge, by using the air-core inductor L1 and the second discharge circuit 17 of the power conversion apparatus 1, most of a common-mode surge current can flow to the second discharge circuit 17 for discharge, thereby protecting the power conversion apparatus 1.

Specifically, when the common-mode surge current exists on the first alternating current output of the power conversion apparatus 1, a change rate of the common-mode surge current is greater than the change rate, existing when the common-mode lightning strike current does not exist on the direct current input of the power conversion apparatus 1, of the working current of the power conversion apparatus 1. Therefore, when the common-mode surge current flows through the air-core inductor L1, the change rate of the current of the air-core inductor L1 suddenly increases, and the impedance value of the air-core inductor L1 increases as the change rate of the current flowing through the air-core inductor L1 increases. In this case, the air-core inductor L1 is equivalent to the high impedance. Thus, the following may be obtained: When the common-mode surge current flows through the air-core inductor L1, the air-core inductor L1 is equivalent to the high impedance, so that a common-mode voltage value of the first alternating current output of the power conversion apparatus 1 reaches a second breakover voltage threshold. In addition, when the common-mode voltage value of the first alternating current output of the power conversion apparatus 1 reaches the second breakover voltage threshold, the gas discharge tube GDT2 is broken down, the second discharge circuit 17 is in the connected state, and an impedance value of a varistor RV3, RV4, or RV5 rapidly decreases. In other words, the second discharge circuit 17 is in the connected state. Therefore, most of the common-mode surge current flows to the second discharge circuit 17 for discharge and does not flow through the power conversion circuit in the power conversion apparatus 1. In this way, impact energy generated by the common-mode surge current does not damage a component of the power conversion circuit, while the power conversion apparatus is reliably grounded internally, thereby protecting the power conversion apparatus 1. The second breakover voltage threshold may be a sum of a breakover voltage threshold of the gas discharge tube GDT2 and a breakover voltage threshold of the varistor RV3, RV4, or RV5.

It should be noted that, when the power conversion apparatus 1 is externally grounded, a worker may send a disabling instruction to the power conversion apparatus 1 by using an external device connected to the power conversion apparatus 1, to indicate that the power conversion apparatus 1 has been externally grounded. The controller 15 in the power conversion apparatus 1 controls, according to the received disabling instruction, the first switch K1 to be turned off, to ensure that the power conversion apparatus 1 in the off-grid mode is not grounded internally and externally at the same time. In this way, the following case is avoided: The power conversion apparatus 1 is grounded at a plurality of points, and a circulating current is generated. Therefore, stability of the power conversion apparatus 1 is improved.

In another optional implementation, after the power conversion apparatus 1 starts working, the controller 15 controls the switches K21 to K23 of the second switch K2 to be all turned on. When a voltage of the alternating current power grid is greater than or equal to a first breakover voltage threshold, it indicates that no power failure occurs in the alternating current power grid, and the power conversion apparatus 1 is in a grid-connected mode. In this case, the first alternating current output of the power conversion apparatus 1 is connected to the alternating current grid, and the controller 15 controls the first switch K1 to be turned off.

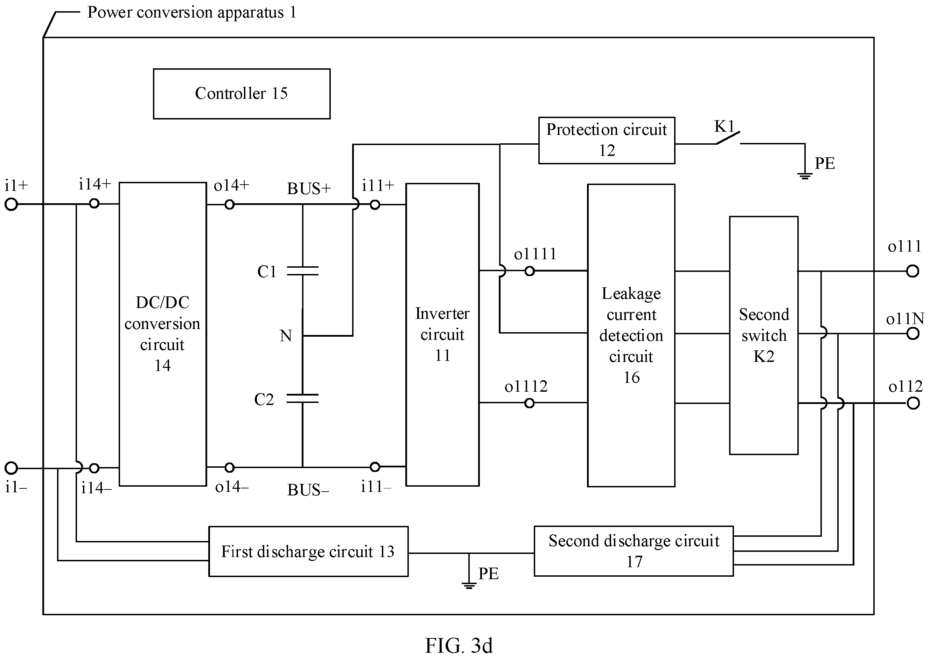

Optionally, the power conversion apparatus 1 may further include a DC/DC conversion circuit 14. For details, refer to the power conversion apparatus 1 shown in FIG. 3d. Herein, for a specific connection relationship of the DC/DC conversion circuit 14 shown in FIG. 3d, refer to the connection relationship of the DC/DC conversion circuit 14 in the power conversion apparatus 1 shown in FIG. 2b. Details are not described herein again.

In this embodiment of this application, the power conversion apparatus 1 in the off-grid mode controls the first switch K1 to be turned on so that the bus midpoint N is connected to the reference ground terminal PE through the protection circuit 12, and controls the bus midpoint to be connected to the neutral output of the power conversion apparatus 1, to implement internal reliable grounding. In addition, when the common-mode lightning strike current flows through the protection circuit 12, the protection circuit 12 is equivalent to a high impedance, so that the common-mode voltage value of the direct current input of the power conversion apparatus 1 reaches the breakover voltage threshold of the first discharge circuit 13. Therefore, when the common-mode lightning strike current exists on the direct current input in the power conversion apparatus 1, most of the common-mode lightning strike current flows to the first discharge circuit 13 for discharge. In this way, impact energy generated by the common-mode lightning strike current does not damage a component of the power conversion circuit, while the power conversion apparatus 1 is reliably grounded internally, thereby protecting the power conversion apparatus 1. Moreover, when the common-mode surge current flows through the protection circuit 12, the protection circuit 12 is equivalent to the high impedance, so that the common-mode voltage value of the first alternating current output of the power conversion apparatus 1 reaches a breakover voltage threshold of the second discharge circuit 17. Therefore, when the common-mode surge current exists on the first alternating current output in the power conversion apparatus 1, most of the common-mode surge current flows to the second discharge circuit 17 for discharge. In this way, impact energy generated by the common-mode surge current does not damage the component of the power conversion circuit, while the power conversion apparatus 1 is reliably grounded internally, thereby protecting the power conversion apparatus 1.

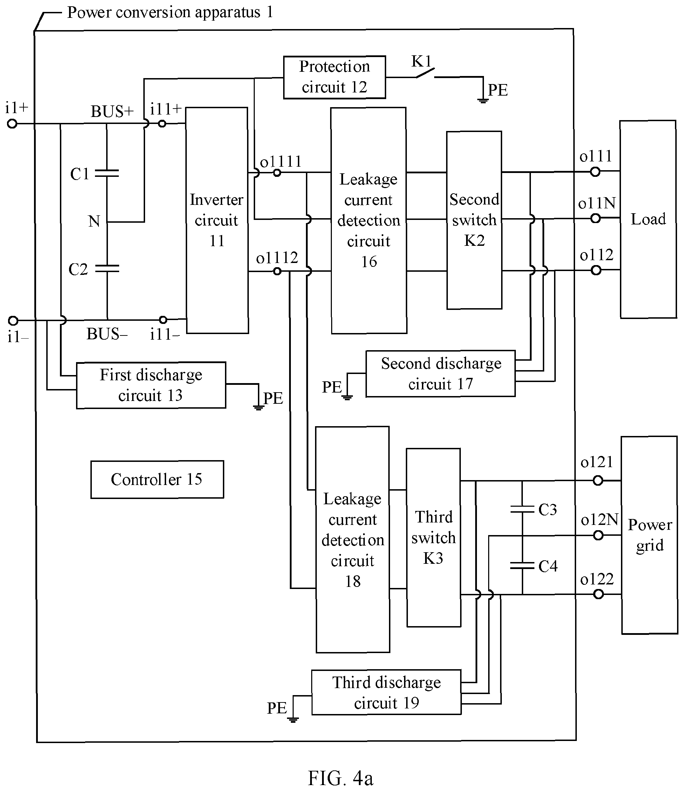

FIG. 4a is a diagram of another structure of a power conversion apparatus according to this application. As shown in FIG. 4a, compared with the power conversion apparatus 1 shown in FIG. 3a, the power conversion apparatus 1 shown in FIG. 4a further includes a second alternating current output, a third switch K3, a first output capacitor C3, and a second output capacitor C4. The second alternating current output of the power conversion apparatus 1 includes a fifth alternating current sub-output o121, a sixth alternating current sub-output o122, and a seventh alternating current sub-output o12N. The fifth alternating current sub-output o121, the sixth alternating current sub-output o122, and the seventh alternating current sub-output o12N of the power conversion apparatus 1 are configured to connect to the alternating current power grid. The first output o1111 and the second output o1112 of the inverter circuit 11 are further connected to the fifth alternating current sub-output o121 and the sixth alternating current sub-output o122 of the power conversion apparatus 1 through the third switch K3. The first output capacitor C3 and the second output capacitor C4 are connected in series between the fifth alternating current sub-output o121 and the sixth alternating current sub-output o122 of the power conversion apparatus 1. A joint between the first output capacitor C3 and the second output capacitor C4 is connected to the seventh alternating current sub-output o12N of the power conversion apparatus 1. Optionally, the power conversion apparatus 1 further includes a leakage current detection circuit 18. The first output o1111 and the second output o1112 of the inverter circuit 11 are connected to the fifth alternating current sub-output o121 and the sixth alternating current sub-output o122 of the power conversion apparatus 1 separately through the leakage current detection circuit 18 and the third switch K3 that are connected in series. Optionally, the power conversion apparatus 1 further includes a third discharge circuit 19. The third discharge circuit 19 is connected between the second alternating current output and the reference ground terminal PE of the power conversion apparatus 1. Specifically, three inputs of the third discharge circuit 19 are respectively connected to the fifth alternating current sub-output o121, the sixth alternating current sub-output o122, and the seventh alternating current sub-output o12N of the power conversion apparatus 1. An output of the third discharge circuit 19 is connected to the reference ground terminal PE.

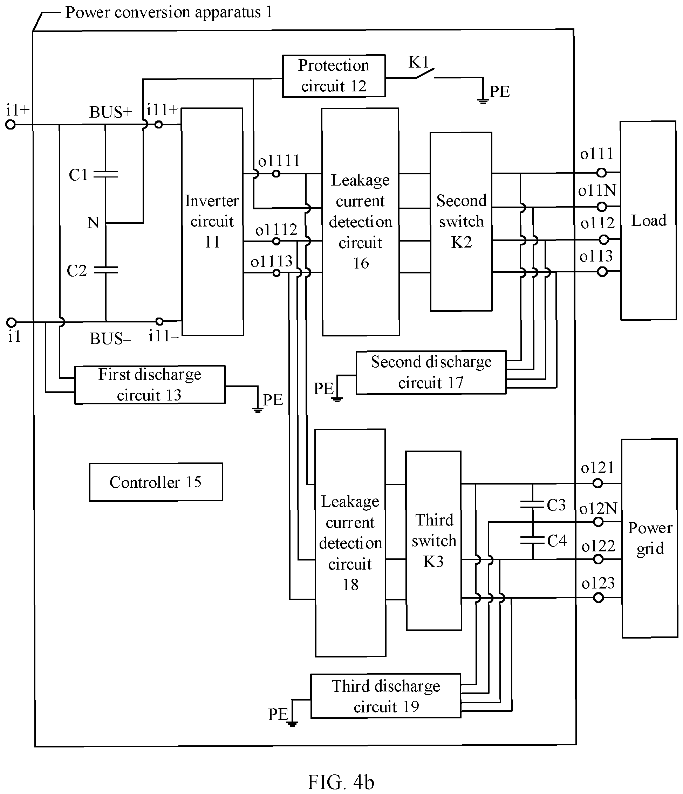

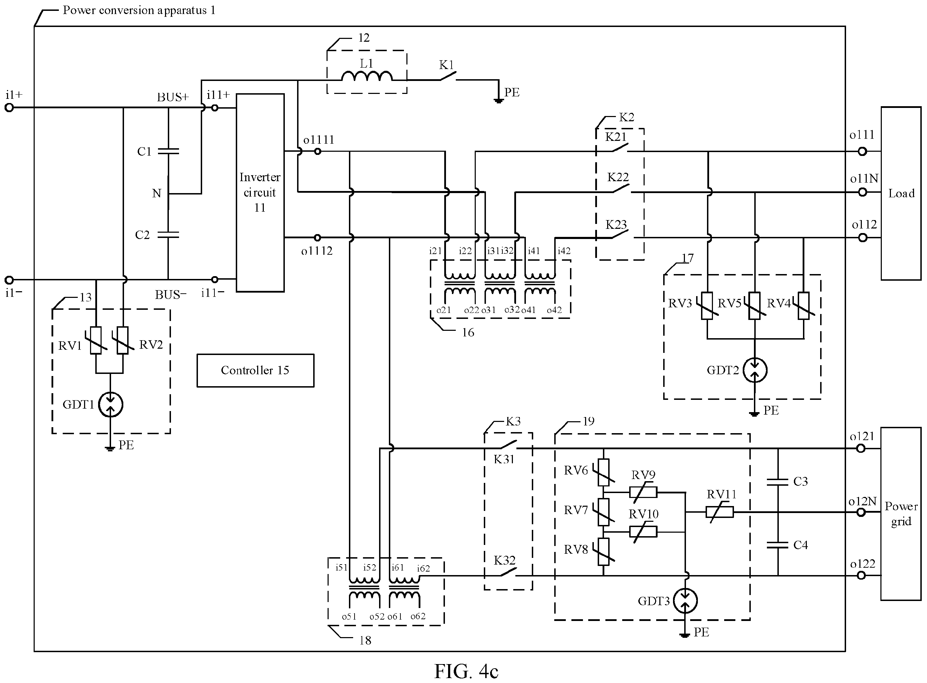

It should be noted that the power conversion apparatus 1 shown in FIG. 4a is a single-phase power conversion apparatus. The power conversion apparatus 1 provided in this application is also applicable to a three-phase power conversion apparatus. For details, refer to the power conversion apparatus 1 shown in FIG. 4b. As shown in FIG. 4b, compared with the power conversion apparatus 1 shown in FIG. 4a, the first alternating current output of the power conversion apparatus 1 shown in FIG. 4b further includes a fourth alternating current sub-output o113, the second alternating current output of the power conversion apparatus 1 further includes an eighth alternating current sub-output o123, and the output of the inverter circuit 11 includes a third output o1113. The third output o1113 of the inverter circuit 11 is connected to the fourth alternating current sub-output o113 of the power conversion apparatus 1 through the leakage current detection circuit 16 and the second switch K2 that are connected in series. The third output o1113 of the inverter circuit 11 is further connected to the eighth alternating current sub-output o123 of the power conversion apparatus 1 through the leakage current detection circuit 18 and the third switch K3 that are connected in series. Regardless of whether the power conversion apparatus 1 is the single-phase power conversion apparatus or the three-phase power conversion apparatus, the power conversion apparatus 1 has the same working principle. Therefore, for ease of description, the following specifically describes the single-phase power conversion apparatus shown in FIG. 4a with reference to the power conversion apparatus shown in FIG. 4c.

FIG. 4c is a diagram of another structure of a power conversion apparatus according to this application. As shown in FIG. 4c, the third switch K3 includes switches K31 and K32. The leakage current detection circuit 18 includes a fourth-group input and a fifth-group input. The fourth-group input includes a fourth-group first input i51 and a fourth-group second input i52. The fifth-group input includes a fifth-group first input i61 and a fifth-group second input i62. The first output o1111 of the inverter circuit 11 is connected to the fourth-group first input i51. The fourth-group second input i52 is connected to the fifth alternating current sub-output o121 of the power conversion apparatus 1 through the switch K31. The second output o1112 of the inverter circuit 11 is connected to the fifth-group first input i61. The fifth-group second input i62 is connected to the sixth alternating current sub-output o122 of the power conversion apparatus 1 through the switch K32. The leakage current detection circuit 18 further includes a fourth-group output and a fifth-group output. The fourth-group output includes a fourth-group first output o51 and a fourth-group second output o52. The fifth-group output includes a fifth-group first output o61 and a fifth-group second output o62. The controller 15 may obtain a leakage current value of the second alternating current output of the power conversion apparatus 1 by obtaining current values of the two groups of outputs of the leakage current detection circuit 18. Therefore, when the leakage current value of the second alternating current output is greater than a leakage current threshold, the power conversion apparatus 1 is protected, for example, the third switch K3 is controlled to be turned off. The third discharge circuit 19 includes an eighth protection element, a ninth protection element, a tenth protection element, an eleventh protection element, a twelfth protection element, a thirteenth protection element, and a fourteenth protection element. The eighth protection element, the ninth protection element, and the tenth protection element are sequentially connected in series between the fifth alternating current sub-output o121 and the sixth alternating current sub-output o122 of the power conversion apparatus 1, and the eleventh protection element and the twelfth protection element are connected in series and then connected in parallel with the ninth protection element. A joint between the eleventh protection element and the twelfth protection element is connected to the seventh alternating current sub-output o12N of the power conversion apparatus 1 through the thirteenth protection element, and the joint between the eleventh protection element and the twelfth protection element is further connected to the reference ground terminal PE through the fourteenth protection element. Each protection element of the third discharge circuit 19 includes a gas discharge tube, a varistor, a transient-voltage-suppression diode, or a fuse. Types of the foregoing seven protection elements may be the same or different. This is not limited in this application. For example, the eighth protection element to the thirteenth protection element are respectively varistors RV6 to RV11, and the fourteenth protection element is a gas discharge tube GDT3. Specific structures and connection relationships of the protection circuit 12, the first discharge circuit 13, the second switch K2, and the leakage current detection circuit 16 are described with reference to the description of the corresponding parts of the power conversion apparatus 1 shown in FIG. 3c. Details are not described herein again.

In an optional implementation, when the voltage of the alternating current power grid is less than the first breakover voltage threshold, it indicates that the power failure occurs in the alternating current power grid, and the controller 15 controls the switches K21 to K23 of the second switch K2 to be all turned on, and controls the switches K31 and K32 of the third switch K3 to be both turned off, so that the power conversion apparatus 1 is in the off-grid mode. In this case, the first alternating current output of the power conversion apparatus 1 is connected to the alternating current load. Then, when the second switch K2 is turned on and the third switch K3 is turned off, the controller 15 controls the first switch K1 to be turned on, so that the power conversion apparatus 1 is reliably grounded internally in the off-grid mode.

After the power conversion apparatus 1 is reliably grounded internally, when the common-mode lightning strike current exists on the direct current input of the power conversion apparatus 1, by using the air-core inductor L1 and the first discharge circuit 13 of the power conversion apparatus 1, the impact energy generated by the common-mode lightning strike current does not damage the component of the power conversion circuit. For a specific implementation, refer to the description of the corresponding parts of the power conversion apparatus 1 shown in FIG. 3c. Details are not described herein again.

After the power conversion apparatus 1 is reliably grounded internally, when the common-mode lightning strike current does not exist on the direct current input of the power conversion apparatus 1, the change rate of the working current of the power conversion apparatus 1 is small. In addition, when the change rate of the current flowing through the air-core inductor L1 is less than a second change rate threshold, the impedance value of the air-core inductor L1 may be ignored. In this way, it may be ensured that when the common-mode lightning strike current does not exist on the direct current input of the power conversion apparatus 1 and the power conversion apparatus 1 is in the off-grid mode, the grounding path between the bus midpoint N and the reference ground terminal PE is the low-impedance path, thereby ensuring that the bus midpoint N and the reference ground terminal PE are at the same potential.

In addition, after the power conversion apparatus 1 is reliably grounded internally, when the first alternating current output of the power conversion apparatus 1 encounters the common-mode surge, by using the air-core inductor L1 and the second discharge circuit 17 of the power conversion apparatus 1, most of the common-mode surge current can flow to the second discharge circuit 17 for discharge, thereby protecting the power conversion apparatus 1. Herein, by using the air-core inductor L1 and the second discharge circuit 17 of the power conversion apparatus 1, the impact energy generated by the common-mode surge current does not damage the component of the power conversion circuit. For a specific implementation, refer to the description of the corresponding parts of the power conversion apparatus 1 shown in FIG. 3c. Details are not described herein again.

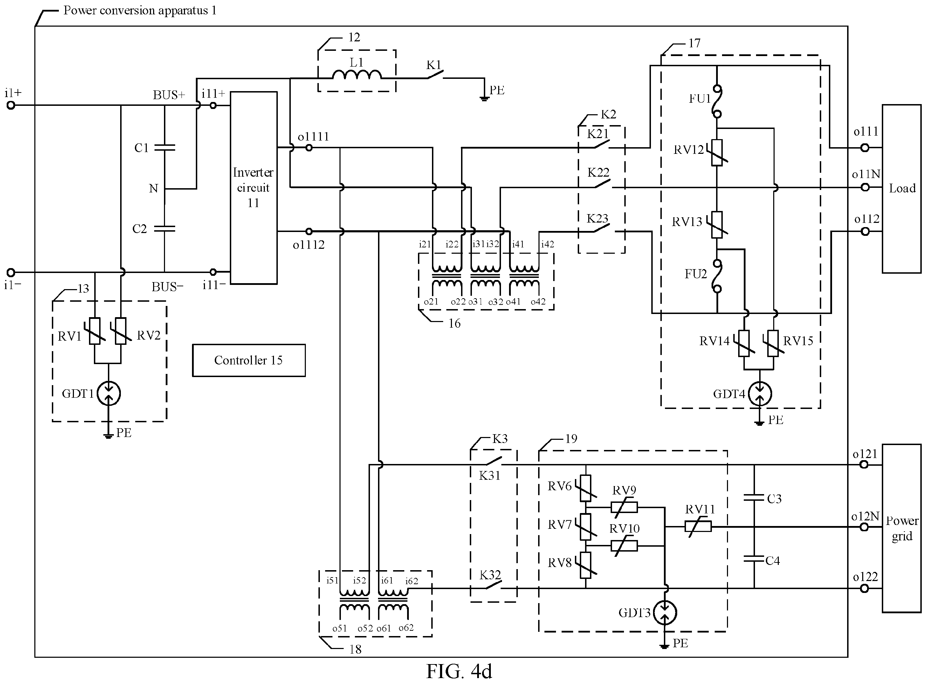

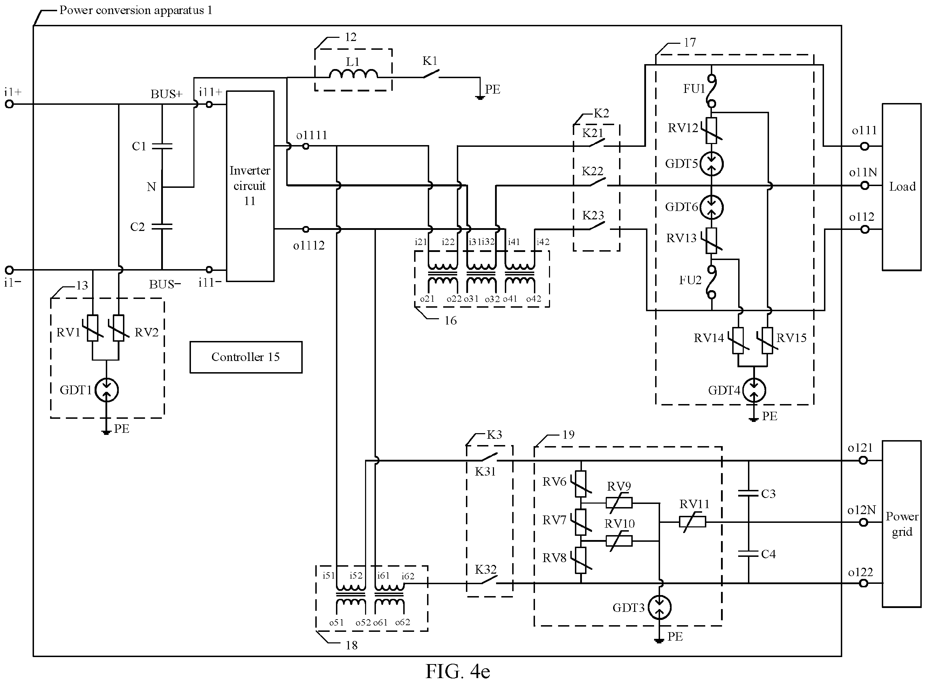

Optionally, the second discharge circuit 17 may further use a circuit structure shown in FIG. 4d. As shown in FIG. 4d, the second discharge circuit 17 includes fuses FU1 and FU2, a gas discharge tube GDT4, and varistors RV12 to RV15. The fuse FU1 and the varistor RV12 are connected in series between the first alternating current sub-output o111 and the third alternating current sub-output o11N, and the fuse FU2 and the varistor RV13 are connected in series between the second alternating current sub-output o112 and the third alternating current sub-output o11N. A joint between the fuse FU1 and the varistor RV12 is connected to the reference ground terminal PE sequentially through the varistor RV15 and the gas discharge tube GDT4, and a joint between the fuse FU2 and the varistor RV14 is connected to the reference ground terminal PE sequentially through the varistor RV15 and the gas discharge tube GDT4. When the common-mode surge current or a differential-mode surge current exists on the first alternating current output of the power conversion apparatus 1, most of the common-mode surge current or the differential-mode surge current may be discharged through the second discharge circuit 17, thereby protecting the power conversion apparatus 1. Optionally, the second discharge circuit 17 shown in FIG. 4d may further include gas discharge tubes GDT5 and GDT6. For details, refer to the second discharge circuit 17 in the power conversion apparatus 1 shown in FIG. 4e. In addition, circuit structures of all discharge circuits provided in this application may be correspondingly adjusted according to an actual requirement. This is not limited in this application.

It should be noted that, when the power conversion apparatus 1 is externally grounded, a worker may send a disabling instruction to the power conversion apparatus 1 by using an external device connected to the power conversion apparatus 1, to indicate that the power conversion apparatus 1 has been externally grounded. The controller 15 in the power conversion apparatus 1 controls, according to the received disabling instruction, the first switch K1 to be turned off, to ensure that the power conversion apparatus 1 in the off-grid mode is not grounded internally and externally at the same time. In this way, the following case is avoided: The power conversion apparatus 1 is grounded at a plurality of points, and a circulating current is generated. Therefore, stability of the power conversion apparatus 1 is improved.

In another optional implementation, when the voltage of the alternating current power grid is greater than or equal to the first breakover voltage threshold, it indicates that no power failure occurs in the alternating current power grid, and the controller 15 controls the switches K21 to K23 of the second switch K2 to be all turned off, and controls the switches K31 and K32 of the third switch K3 to be both turned on, so that the power conversion apparatus 1 is in the grid-connected mode. In this case, the first alternating current output of the power conversion apparatus 1 is connected to the alternating current power grid. Then, when the second switch K2 is turned off and the third switch K3 is turned on, the controller 15 controls the first switch K1 to be turned off.

In addition, after the power conversion apparatus 1 is in the grid-connected mode, when a common-mode voltage value of the second alternating current output of the power conversion apparatus 1 is excessively high, for example, when a voltage value between the fifth alternating current sub-output o121 and the reference ground terminal PE of the power conversion apparatus 1 is greater than a third breakover voltage threshold, impedance values of the varistors RV6, RV7, RV9, and RV10 rapidly decrease, and the gas discharge tube GDT3 is broken down and is in the connected state. In other words, the third discharge circuit 19 is in the connected state, and the voltage value between the fifth alternating current sub-output o121 and the reference ground terminal PE of the power conversion apparatus 1 is discharged through the third discharge circuit 19, so that the common-mode voltage value of the second alternating current output of the power conversion apparatus 1 rapidly decreases, thereby implementing overvoltage protection for the second output of the power conversion apparatus 1.

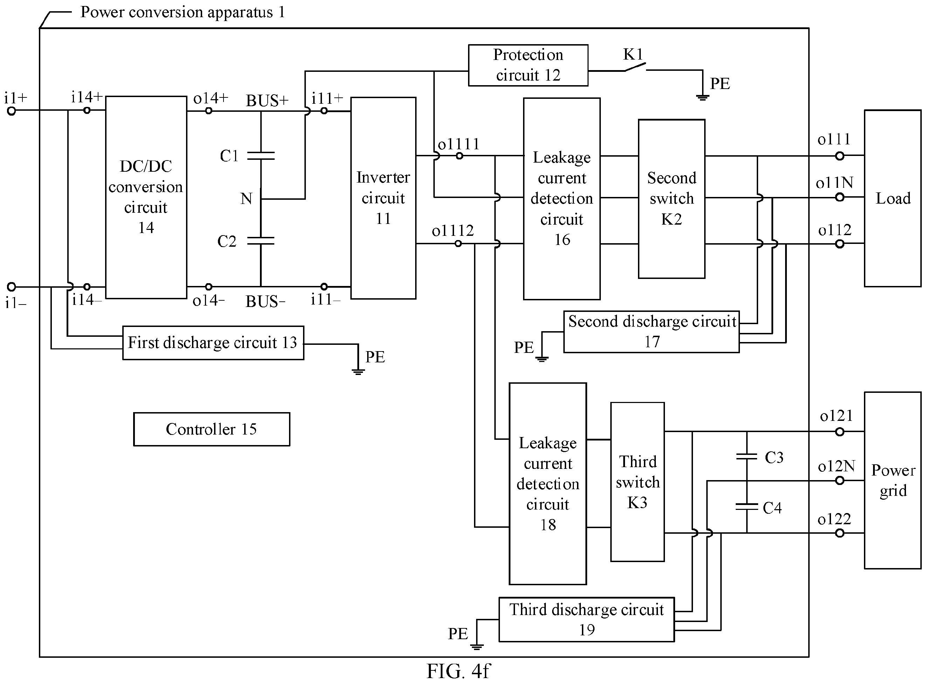

Optionally, the power conversion apparatus 1 may further include a DC/DC conversion circuit 14. For details, refer to the power conversion apparatus 1 shown in FIG. 4f. Herein, for a specific connection relationship of the DC/DC conversion circuit 14 shown in FIG. 4f, refer to the connection relationship of the DC/DC conversion circuit 14 in the power conversion apparatus 1 shown in FIG. 2b. Details are not described herein again.

In this embodiment of this application, the second switch K2 is added between the output of the inverter circuit 11 and the first alternating current output of the power conversion apparatus 1, and the third switch K3 is added between the output of the inverter circuit 11 and the second alternating current output of the power conversion apparatus 1, so that the power conversion apparatus 1 can flexibly switch between the off-grid mode and the grid-connected mode. Through the manner of adding the protection circuit 12 and the first switch K1 between the bus midpoint N and the reference ground terminal PE, and adding the first discharge circuit 13 and the second discharge circuit 17 to the power conversion apparatus 1, the power conversion apparatus 1 can be reliably grounded internally in the off-grid mode, and most of the common-mode lightning strike current can flow to the first discharge circuit 13 for discharge in the off-grid mode when the common-mode lightning strike current exists on an input. In addition, in the off-grid mode, when the common-mode surge current exists on a first output, most of the common-mode surge current can flow to the second discharge circuit 17 for discharge, thereby protecting the power conversion apparatus 1.

It should be noted that, in addition to the air-core inductor, the protection circuit 12 provided in this application may further include any protection component, for example, an anti-saturation inductor, that presents a high-impedance characteristic when the common-mode lightning strike current flows through the protection component and presents a low-impedance characteristic when a non-common-mode lighting strike current flows through the protection component. This is not limited in this application. In addition, a working principle of the protection circuit 12 when the protection circuit 12 is another protection component such as an anti-saturation inductor, is consistent with a working principle of the protection circuit 12 when the protection circuit 12 is an air-core inductor L1. Details are not described herein again. In addition, in the power conversion apparatus 1 provided in this application, a quantity of positive bus capacitors is the same as a quantity of negative bus capacitors, and both are at least one. In the foregoing embodiment, an example in which the quantity of positive bus capacitors and the quantity of negative bus capacitors are both one is used for description. When the quantity of positive bus capacitors and the quantity of negative bus capacitors are both multiple, the working principle of the power conversion apparatus 1 remains unchanged, and a circuit structure and a working principle of the power conversion apparatus 1 when the quantity of positive bus capacitors and the quantity of negative bus capacitors are multiple are not described herein.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion apparatus, wherein the power conversion apparatus comprises a direct current input, a positive direct current bus, a negative direct current bus, a positive bus capacitor, a negative bus capacitor, an inverter circuit, a protection circuit, a first discharge circuit, a reference ground terminal, and a first alternating current output;
the direct current input is configured to connect to a direct current source, the first alternating current output is configured to connect to a load, and an input of the inverter circuit is connected to the direct current input separately through the positive direct current bus and the negative direct current bus;
the positive direct current bus is connected to the negative direct current bus through the positive bus capacitor and the negative bus capacitor that are sequentially connected in series, a joint between the positive bus capacitor and the negative bus capacitor is connected to the reference ground terminal through the protection circuit, and the joint between the positive bus capacitor and the negative bus capacitor is further configured to provide a direct current voltage for the first alternating current output;
an impedance value of the protection circuit increases as a change rate of a current flowing through the protection circuit increases, so that a common-mode voltage value of the direct current input is greater than a first breakover voltage threshold; and
the first discharge circuit is connected between the direct current input and the reference ground terminal, and is configured to be in a connected state when the common-mode voltage value is greater than the first breakover voltage threshold.

2. The power conversion apparatus according to claim 1, wherein the power conversion apparatus further comprises a first switch and a controller, the joint between the positive bus capacitor and the negative bus capacitor is connected to the reference ground terminal through the first switch and the protection circuit that are connected in series, and the first alternating current output is further configured to connect to a power grid; and
the controller is configured to: when a voltage of the power grid is less than a first breakover voltage threshold, control the first switch to be turned on.

3. The power conversion apparatus according to claim 2, wherein the controller is further configured to: when the voltage of the power grid is greater than or equal to the first breakover voltage threshold, control the first switch to be turned off.

4. The power conversion apparatus according to claim 1, wherein the power conversion apparatus further comprises a first switch, a second switch, a third switch, a second alternating current output, and a controller, the joint between the positive bus capacitor and the negative bus capacitor is connected to the reference ground terminal through the first switch and the protection circuit that are connected in series, the joint between the positive bus capacitor and the negative bus capacitor is further connected to the first alternating current output through the second switch, an output of the inverter circuit is connected to the first alternating current output and the second alternating current output of the power conversion apparatus separately through the second switch and the third switch, and the second alternating current output is configured to connect to a power grid; and
the controller is configured to: when a voltage of the power grid is less than a first breakover voltage threshold, control the second switch to be turned on and the third switch to be turned off; and when the second switch is turned on and the third switch is turned off, control the first switch to be turned on.

5. The power conversion apparatus according to claim 4, wherein the controller is further configured to: when the voltage of the power grid is greater than or equal to the first breakover voltage threshold, control the second switch to be turned off and the third switch to be turned on; and when the second switch is turned off and the third switch is turned on, control the first switch to be turned off.

6. The power conversion apparatus according to any one of claims 1 to 5, wherein the power conversion apparatus further comprises a leakage current detection circuit, the leakage current detection circuit is located on a connection line between the output of the inverter circuit and the first alternating current output of the power conversion apparatus, and the leakage current detection circuit is further located on a connection line between the first alternating current output of the power conversion apparatus and the joint between the positive bus capacitor and the negative bus capacitor.

7. The power conversion apparatus according to any one of claims 1 to 6, wherein the protection circuit comprises an air-core inductor or an anti-saturation inductor.

8. The power conversion apparatus according to any one of claims 1 to 7, wherein the power conversion apparatus further comprises a DC/DC conversion circuit, and the DC/DC conversion circuit is configured to: perform direct current conversion on a direct current of the direct current input, and output a converted direct current to the positive direct current bus and the negative direct current bus.

9. The power conversion apparatus according to any one of claims 1 to 8, wherein the first discharge circuit comprises a first protection element, a second protection element, and a third protection element, and the direct current input of the power conversion apparatus comprises a first direct current input and a second direct current input; and
a first end of the first protection element is connected to the reference ground terminal, a second end of the first protection element is connected to the first direct current input and the second direct current input of the power conversion apparatus respectively through the second protection element and the third protection element, and each of the first protection element, the second protection element, and the third protection element comprises a gas discharge tube, a varistor, or a transient-voltage-suppression diode.

10. The power conversion apparatus according to any one of claims 1 to 9, wherein the power conversion apparatus further comprises a second discharge circuit;
the impedance value of the protection circuit increases as the change rate of the current flowing through the protection circuit increases, so that the common-mode voltage value of the direct current input is greater than the first breakover voltage threshold, and a common-mode voltage value of the first alternating current output is greater than a second breakover voltage threshold; and
the second discharge circuit is connected between the first alternating current output and the reference ground terminal of the power conversion apparatus, and is configured to be in a connected state when the common-mode voltage value of the first alternating current output is greater than a second breakover voltage threshold.

11. The power conversion apparatus according to claim 10, wherein the second discharge circuit comprises a fourth protection element, a fifth protection element, a sixth protection element, and a seventh protection element, and the first alternating current output of the power conversion apparatus comprises a first alternating current sub-output, a second alternating current sub-output, and a third alternating current sub-output; and
a first end of the fourth protection element is connected to the reference ground terminal, a second end of the fourth protection element is connected to the first alternating current sub-output, the second alternating current sub-output, and the third alternating current sub-output of the power conversion apparatus respectively through the fifth protection element, the sixth protection element, and the seventh protection element, and each of the fourth protection element, the fifth protection element, the sixth protection element, and the seventh protection element comprises a gas discharge tube, a varistor, or a transient-voltage-suppression diode.
